# EUROPEAN PATENT SPECIFICATION

(11) **EP 0 314 449 B1**
(45) Date of publication and mention of the grant of the patent: **08.02.1995**
(21) Application number: 88310053.9
(22) Date of filing: 26.10.1988
(51) Int. Cl.: C08F 8/00, C08J 3/00

(54) **High-surface-area compositions**
Zusammensetzungen mit hoher wirksamer Oberfläche
Compositions à aire de surface élevée

(30) Priority: 26.10.1987 US 113574
(43) Date of publication of application: 03.05.1989
(73) Proprietor: ROHM AND HAAS COMPANY, Philadelphia Pennsylvania 19105 (US)
(72) Inventor: Maroldo, Stephen Gerard, Harleysville Pennsylvania 19438 (US); Kopchik, Richard Michael, Southampton Pennsylvania 18966 (US); Langenmayr, Eric Jon, Laverock Pennsylvania 19118 (US)
(74) Representative: Angell, David Whilton

(56) References cited:
- EP-A- 0 007 791
- EP-A- 0 007 792
- EP-A- 0 152 780
- CHEMICAL ABSTRACTS, vol. 100, no. 24, June 1984, page 21, abstract no. 192592x,Columbus, Ohio, US; & CS-A-215 801

## Description

This invention relates to polymeric adsorbents and more particularly to high-surface-area polymeric fibers and microbeads useful as adsorbents.

Adsorbents are commonly solid materials which exhibit selectivity at their surface for substances in a mixture, thereby providing a means of separating such substances from the mixture. The high surface area characteristic of adsorbents (usually well above 5 m²/g of material) normally results from a fine particle size (non-porous adsorbents) or from pores in the adsorbent particles (porous adsorbents). Carbon black, TiO₂ and ZnO pigments are examples of non-porous adsorbents. Granular carbon, silica gel, bone char, certain soils and asbestos are examples of well-known porous adsorbents obtained from naturally occurring materials. These suffer seriously from high moisture adsorption in humid atmospheres, poor reproducibility during manufacture, and fragmentation during use in cyclic processes, because their rigid structures are broken by the high osmotic pressure of adsorbed materials in their small pores.

For separation or purification of complex substances (such as pharmaceuticals) synthetic adsorbents have been developed, some of which serve also as ion exchange materials or as intermediates for the manufacture of ion exchange materials. However, ion exchange is an absorption as well as an adsorption phenomenon, so that although all ion exchange materials are adsorbents, the converse is not necessarily true.

The synthetic adsorbents generally are porous polymeric solids, polystyrene and styrene-divinylbenzene copolymers being representative. Although it is possible to prepare synthetic polymers that are finely divided or to grind such polymers to a fine particle size, to obtain high surface area, fine particle size adsorbents cannot be used in cyclic processes, particularly processes involving columns, since the fine particles pack too tightly and impede flow. Moderately large adsorbent particles, from about 0.02 mm to 2 mm diameter or larger, are therefore required. Polymeric beads, obtained by known suspension polymerization techniques, have a convenient particle size for use in columnar operations. While the polymeric adsorbents can be made hydrophobic and the bead form makes them more useful, their adsorbent properties have been too limited for the adsorbents to compete effectively with the carbonaceous adsorbents obtained by pyrolyzing of organic materials.

Macronet adsorbents in bead form are described in US-A-4,263,407 and EP-A-0 007 792. They are produced by swelling a lightly crosslinked, macroreticular, aromatic polymer bead in an inert organic solvent, and then post-crosslinking the swollen beads with an external crosslinker. These adsorbents are called "macronets" because the crosslinks are stable and have a long and rigid structure which allows the polymer to retain the displacement of the chains to significant distances from one another the occurs during solvent swelling, even after the solvent has been removed. US-A-4,543,365 and EP-A-0 152 780 disclose similar bead materials, but employing more highly crosslinked resins.

EP-A-0 007 791 describes a process for preparing thermally crosslinked polymer beads having a particle diameter of from 0.02 mm to 2 mm and which are useful as intermediates in the preparation of polymeric adsorbents and ion exchange resins of the macronet type.

DD-A-229,992 teaches a one-step preparation of high-surface-area, sulfonic acid resin beads from lightly crosslinked, suspension-polymerized polystyrene beads by chloromethylation and sulfonation in the presence of a swelling solvent; the resulting beads appear to be macronet beads.

Chemical Abstracts, vol 100, No. 24, June 1984, page 21, abstract no. 192592x discloses the preparation of aldehyde derivatives of polystyrene by reaction of linear or crosslinked styrene polymers or copolymers with a dichloromethyl alkyl ether in the presence of Friedel-Crafts catalysts.

Fibers have particular advantages over conventional adsorbents like carbon filaments or granular, activated carbons; they may be woven or otherwise processed into cloth or other textile materials for making garments protective against chemicals, filters for air purification systems, and the like. They, and other polymeric adsorbents, are also easier to regenerate and less sensitive to high humidity than activated carbons.

Fibers, by their small diameter, provide relatively high surface areas, and chemically modified, polystyrene-based fibers are known, as for example those of Yoshioka et al., Bull. Chem. Soc. Japan 56, 3726 (1983) or Japanese Kokai 77-120986. These fibers are composites of a vinyl aromatic polymer matrix and longitudinal fibrils of alpha-olefin polymer imbedded in the matrix. The references teach treatment of the vinyl aromatic surface of the fibers to attach functional groups such as sulfonic acid groups and amine or ammonium groups.

Japanese Kokai 75-145617 discloses treating phenol-formaldehyde polymer fibers with alkylating reagents such as paraformaldehyde in acidic media, a reaction which the above Yoshioka and Kokai 77-120986 use to prepare the surface for functionalization. In Kokai 75-145617 this reaction is followed by a mild pyrolysis in an oxidizing atmosphere at temperatures from 250 to 450°C; the reference reports that this treatment enhances the surface area of the fibers to at least 10 m²/g and as much as 400m²/g.

Another approach to porous fibers is disclosed by Sruta et al., Chemicke Vlakna, 1986, 36, No. 3, pages 175-181. This reference discloses porous polyester fibers formed when calcium carbonate, spun into the fibers as a delustrant, is dissolved with the acid.

We have discovered a process for increasing the surface area of crosslinked poly(vinyl aromatic) polymers in the form of fibers or emulsion-polymerized particles.

According to the present invention there is provided a process for increasing the surface area of crosslinked poly(vinyl aromatic) polymers in the form of fibers or emulsion-polymerized particles having a particle diameter of from 0.01 to 1»m, which process comprises swelling the polymer in a swelling agent which does not deactivate Friedel-Crafts catalysts and which does not interfere with the formation of a macronet structure, and subsequently introducing additional crosslinking into the polymer to stabilize its swollen structure and form a macronet structure, the additional crosslinking being introduced by:-
i. when the polymer contains active crosslinking sites, contacting the polymer with a Friedel-Crafts catalyst; or
ii. when the polymer contains no active crosslinking sites, reacting the polymer with a crosslinking agent.

The polymers which are converted to macronet structures in the process of the invention are poly(vinyl aromatic) polymers, more preferably polystyrene, poly(alpha-methylstyrene) and polymers of styrene ring substituted by 1-3 alkyl groups of 1-3 carbon atoms each. Minor amounts, i.e. less than 50% by weight, of other monoethylenically unsaturated monomers capable of copolymerizing with the aromatic weight monomer may be copolymerized with it. A particularly preferred polymer is a heterogeneous polymeric fiber comprising a matrix of the polyaromatic polymer described above, optionally blended with another polymer, preferably a polyolefin, and imbedded longitudinally therein filaments of a second polymer phase, the second polymer being preferably a polyolefin and more preferably polypropylene or polybutenes such as poly(butene-1) or poly(3-methyl-1-butene). The diameter of the imbedded filaments may range from about 1 to about 10»m. The polymer may be formed into fibers using conventional processes such as the melt spinning process described by Yoshioka et al., Bull. Chem. Soc. Japan, Vol. 56, page 3726 (1983).

Another preferred polymer is an emulsion polymerized poly(vinylaromatic) polymer as described above, in the form of a particle in the diameter range from about 0.01 to about 1 »m. Such particles are referred to herein as microbeads, and may be prepared according to emulsion or latex polymerization procedures that are well known in the art, such as those of US-A-4,200,695. Forming the macronet structure in such particles increases their size significantly above the size of the original polymer particle.

Preferred swelling agents have a boiling point above about 50°C at atmospheric pressure, although lower boiling solvents may be used at higher pressures and temperatures above about 50°C. Suitable swelling agents which meet these criteria may readily be selected by one skilled in the art from among aromatic hydrocarbons, halogenated hydrocarbons, nitroparaffins, nitroaromatic compounds, ring-halogenated aromatic compounds, aliphatic hydrocarbons of about six or more carbon atoms, and carbon disulfide.

Also suitable but less preferred as swelling agents are aliphatic and aromatic ethers of five or more carbon atoms. Swelling agents which participate in the crosslinking reaction are contemplated within the scope of the invention, so long as they do not interfere with the reaction. Such participating swelling agents are at least difunctional, examples are aliphatic 1,2-dihalo materials and side-chain chlorinated dialkylaryl hydrocarbons. Mixtures of the useful swelling agents may also be used.

Examples of suitable swelling agents selected from the above groups include toluene, xylene, chlorobenzene, styrene monomer, ethylene dichloride, propylene dichloride and alpha, alpha-dichloro-p-xylene.

The stabilizing crosslinks, i.e., the long, rigid crosslinks that stabilize the expanded, or macronet, structure of the polymer, may either be formed by adding a crosslinking reagent to the swollen polymer, or by adding a crosslink-promoting catalyst to a swollen polymer which contains active crosslink sites.

The matrix polymer of the fibers and the emulsion polymer do not normally contain a significant number of active crosslinking sites unless a monomer containing active sites is employed, such as vinylbenzyl chloride, or unless it is treated further. A preferred treatment for introducing active crosslinking sites is haloalkylation. In this treatment a haloalkylating reagent such as methyl chloromethyl ether is allowed to react with the polymer to introduce haloalkyl groups which act as active cross linking sites.

The catalysts used for promoting the crosslinking reaction, when the polymer contains active crosslinking sites, are the Friedel-Crafts catalysts, preferably Lewis acids such as ferric chloride, stannic chloride, aluminum chloride, aluminum bromide, boron trifluoride and zinc chloride. The preferred Lewis acid is ferric chloride.

The catalyst, optionally as a solution, is allowed to contact the swollen polymer containing the active crosslinking sites, preferably at a temperature of from about 15°C to about 100°C, and is preferably allowed to react for from about two hours to about 24 hours at a temperature from about 15°C to about 150°C, more preferably from about 85°C to about 105°C, to produce the macronet structures of the invention.

In the absence of active cross linking sites, the swollen matrix polymer or the emulsion polymer may also be crosslinked to form the macronet fibers or microbeads of the present invention by reacting it with a crosslinking reagent, as mentioned above. The cross linking reagent is an acylating or alkylating agent, which includes the haloalkylating reagents useful for introducing active sites. Other haloalkylating reagents may be used, such as alpha,alpha-dichloro-p-xylene, dichloromethane, bis(4,4'-chloromethyl) biphenyl, bis(chloromethyl)thiophene, 1,4-dichloro-hexane, 1,4-dichlorobutane, chloroform and carbon tetrachloride. Other alkylating reagents such as polyols and polyolefins may also be used, for example, alkylene glycols such as ethylene glycol and propylene glycol, diepoxides and polybutadienes. The alkylating agent may contain aromatic groups, provided the atoms of the alkylating agent which bond to the polymer are aliphatic carbon atoms. The alkylating agent may also be paraldehyde, formaldehyde or a formaldehyde generator in the presence of a strong acid such as sulfuric acid.

Difunctional acylating agents are also suitable for introducing active crosslinking sites; these agents are preferably aromatic, but may include aliphatic compounds. The preferred acylating agents are diacid chlorides, as for example fumaryl dichloride, maleyl dichloride, malonyl dichloride, oxalyl chloride, succinyl dichloride, adipyl dichloride and sebacyl dichloride. In the case of aromatic diacid chlorides the carbonyl groups must be separated by at least one carbon atom; suitable aromatic diacid chlorides include terephthaloyl chloride and isophthaloyl chloride, but not orthophthaloyl chloride (the carbonyl groups of which are not separated by at least one carbon atom) because it tends to form anthraquinone rings which in turn participate in redox reactions. Further suitable diacid chlorides include the 1,4-, 1,5-and 1,6 naphthoyl dichlorides and anthracene-1,5- and 1,9- diacid chlorides. Other suitable acylating agents include phosgene and thiophosgene. Other agents may act as crosslinkers, as for example sulfur halides such as sulfur monochloride, sulfur dichloride, and the corresponding sulfur bromides. The crosslinking reagent is allowed to react with the swollen polymer at a temperature of from about 15°C to about 150°C for from about 2 to about 24 hours.

In one embodiment of the present invention the crosslinking agent is an acylating agent, preferably a diacid chloride of fumaric, maleic, malonic, succinic, adipic or sebacic acid, phosgene or thiophosgene; or an alkylating agent, preferably methyl halomethyl ether, alpha, alpha-dichloro-p-xylene, dichloromethane, bis (4,4'-chloromethyl) biphenyl, bis (chloromethyl) thiophene, 1,4-dichlorohexane, 1,4-dichlorobutane, chloroform, carbon tetrachloride, an alkylene glycol, a diepoxide, a polybutadiene, paraformaldehyde in the presence of a strong acid, formaldehyde in the presence of a strong acid, or a formaldehyde generator in the presence of a strong acid.

Preferably the swollen polymer is reacted with the crosslinking agent a temperature of from 15°C to 150°C for a period of from 2 to 24 hours.

Either process for forming the macronet crosslinks may occur in the presence of low-molecular weight coupling agents such as alpha, alpha-dichloro-p-xylene, trivinylbenzene and terephthaloyl dichloride.

According to the present invention there is also provided a crosslinked poly(vinyl aromatic) polymer, in the form of fibers or emulsion polymerized particles, having a macronet structure and a surface area of at least 100 m²/g, and wherein, when the polymer is in the form of emulsion polymerized particles, the polymer formed is from emulsion polymerized particles having a diameter of from 0.01 to 1»m.

The macronet fibers and emulsion polymer particles of the invention possess a high surface area, as measured by nitrogen adsorption (BET). They have high adsorptive capacity for gases and vapors. They may be chemically functionalized for adsorptive, organic-reactive or ion exchange functionality. For example, they may be functionalized with chemically active functional groups to enhance selectivity of adsorbates, or to react with adsorbates. Examples of such groups include sulfonic acid groups, dimethylaminomethyl groups, quaternized alkyltrimethylammonium groups and oxime groups. They can provide an adsorptive filter medium which has the adsorption rate of a bed of fine particulate adsorbers while avoiding the problems of high pressure drop and filter clogging. Consequently, the present invention further provides the use of a polymer according to the invention as an adsorbent or as an ion exchange material.

The following examples illustrate the invention. All proportions are by weight unless otherwise stated, and all reagents are of good commercial quality unless otherwise stated.

### EXAMPLE 1

This example illustrates the preparation of the preferred, non-homogeneous, polypropylene-in-polystyrene polymer and fibers from that polymer. This preparation is described in the Yoshioka reference cited above, and is believed to be the procedure by which the fiber samples used in the following examples were prepared; the actual fiber samples were obtained from Toray Industries, Sonoyama Otsu 520, Japan.

Sixteen polypropylene filaments are melt spun at 255°C within a matrix fiber of polystyrene blended with 20% by weight polypropylene; the weight ratio of polypropylene filaments to matrix polymer is 1:1. The fiber is drawn to five times its original length, to form a fiber 24 »m in diameter and containing 16 filaments of polypropylene, each 4.2 »m in diameter, embedded within the polystyrene-polypropylene matrix.

A portion of the resulting fibers is lightly crosslinked using a solution of 5% by weight paraformaldehyde, 25% by weight glacial acetic acid and 70% by weight concentrated sulfuric acid; a second portion is highly crosslinked using a similar reagent, and a third portion is uncrosslinked.

The three samples of fiber prepared according to the procedure above were tested for surface area by BET (using a Quantasorb Surface Area Analyzer and dried samples), and for elemental analysis; the following results were obtained:

| Fiber Sample | Cross-linking | Surface Area (m²/g) | Elemental Analysis (%) | | | |
|---|---|---|---|---|---|---|
| | | | C | H | O | Cl |
| A | None | <1 | 88.17 | 10.95 | -- | -- |
| B | Light | <1 | 86.31 | 10.71 | 1.47 | -- |
| C | High | <1 | 87.71 | 10.61 | 0.08 | -- |

### EXAMPLE 2

This example illustrates chloromethylation of the fibers of Example 1 to produce fibers having active crosslinking sites. For each of the crosslinked, heterogeneous fibers of Example 1, a 10 g sample was added to 80 ml methyl chloromethyl ether at ambient temperature, and the mixture was stirred for one hour. A solution of 9.4 ml stannic chloride in 10 ml methyl chloromethyl ether was added to the mixture over a period of 15 minutes while maintaining the temperature at 25-30°C, the low temperature being selected to minimize secondary crosslinking. When the addition was complete the mixture was held at 30°C for 4.5 hours, then cooled to 20°C, and 125 ml water was added over a period of 30 minutes while maintaining the temperature below 35°C, to quench the reaction. The solution was stirred for an additional 30 minutes, the fibers were filtered, and a wash step of resuspending in 100 ml deionized water, stirring for 30 minutes and refiltering was repeated twice. The fibers were then air dried for one hour and dried in a vacuum oven overnight at 50-60°C. This procedure yielded 19.1 g of chloromethylated fiber containing 66.9% solids. Elemental analysis of the fiber showed 73.0% carbon, 8.96% hydrogen and 17.3% chlorine. The suface area of the chloromethylated fiber, measured by BET, was less than 1 m²/g.

### EXAMPLE 3

This example illustrates forming a macronet fiber from the chloromethylated fiber of Example 2. A 0.67 g sample of the fiber from Example 2 was transferred to a 100 ml, 3-neck flask fitted with reflux condenser and magnetic stirrer; 50 ml ethylene dichloride were added and the mixture was stirred for two hours to swell the polymer. To the mixture 0.5 ml stannic chloride was added, and the mixture was heated to reflux and allowed to reflux for 16 hours. The mixture was allowed to cool to room temperature, and the reaction was quenched by adding 100 ml acetone. The acetone was decanted from the fibers, which were washed once with another 100 ml of acetone and twice with 100 ml portions of water, the wash liquid being decanted from the fibers after each wash. The fibers were filtered and then allowed to air dry for one hour. The air-dried fibers were dried under vacuum at 50 - 60°C overnight.

### EXAMPLES 4-24

The procedure of Example 3 was repeated, varying the starting fiber, the type and amount of the Friedel-Crafts catalyst and the solvent. Stannic chloride, aluminum chloride and ferric chloride were employed at mole ratios of fiber to catalyst ranging from 1.1:1 to 3.7:1, and solvents used were ethylene dichloride or dichloromethane; in Examples 13 and 14, 3.7 millimoles para-dichloroxylene was also present.

The fibers used were prepared according to Example 1, except that initial crosslinking of the fiber was either high or low. The resulting macronet fibers were examined for appearance and tested for surface area by BET; the results for these examples are shown in Table 1.

**TABLE I**

| Sample from Example No. | Polymer Crosslinking (mmol) | Catalyst (mmol) | Ratio* | Solvent | Fiber Appearance | Surface Area by BET m²/g |
|---|---|---|---|---|---|---|
| 3 | High(5.8) | SnCl₄(4.3) | 1.3 | EDC | Good | 247 |
| 4 | Low(5.8) | SnCl₄(4.3) | 1.3 | EDC | Good | 172 |
| 5 | High(12.5) | SnCl₄(8.5) | 1.5 | EDC | Good | 246 |
| 6 | Low(12.5) | SnCl₄(8.5) | 1.5 | EDC | Good | 186 |
| 7 | High(9.6) | AlCl₃(8.6) | 1.1 | EDC | Poor | -- |
| 8 | Low(9.6) | AlCl₃(8.6) | 1.1 | EDC | Poor/Good | 339 |
| 9 | High(9.6) | AlCl₃(3.5) | 2.7 | EDC | -- | 311 |
| 10 | Low(9.6) | AlCl₃(3.5) | 2.7 | EDC | Good | <10 |
| 11 | High(9.6) | SnCl₄(6.4) | 1.5 | MC | Good | <10 |
| 12 | Low(9.6) | SnCl₄(6.4) | 1.5 | MC | Good | <10 |
| 13 | High(9.6) | SnCl₄(6.4) | 1.5 | EDC** | Excellent | 194 |
| 14 | Low(9.6) | SnCl₄(6.4) | 1.5 | EDC** | Good | 183 |
| 15 | High(25.5) | SnCl₄(17.1) | 1.5 | MC | Good | <10 |
| 16 | Low(25.5) | SnCl₄(17.1) | 1.5 | MC | Good | <10 |
| 17 | High(25.8) | SnCl₄(17.1) | 1.5 | EDC | Excellent | 304 |
| 18 | Low(25.8) | SnCl₄(17.1) | 1.5 | EDC | Good | 283 |
| 19 | High(25.5) | AlCl₃(13.9) | 1.8 | EDC | Poor | 426 |
| 20 | Low(25.5) | AlCl₃(13.9) | 1.8 | EDC | Poor | 586 |
| 21 | High(25.5) | AlCl₃(6.9) | 3.7 | EDC | Good | 355 |
| 22 | Low(25.5) | AlCl₃(6.9) | 3.7 | EDC | Good | 642 |
| 23 | High(25.0) | FeCl₃(15.1) | 1.6 | EDC | Excellent | 440 |
| 24 | Low(25.0) | FeCl₃(15.1) | 1.6 | EDC | Excellent | 317 |
| EDC = Ethylene Dichloride MC = Dichloromethane | | | | | | |

| | | | | | | |
|---|---|---|---|---|---|---|
| *Ratio = (mmol fiber/mmol catalyst) | | | | | | |
| ** PDX = Paradichloroxylene (3.7 mmol also present) | | | | | | |

### EXAMPLE 25

This example illustrates forming a macronet fiber from fiber which does not have active crosslinking sites, by treating the fiber with a crosslinking reagent. A 15 g sample of crosslinked fiber prepared according to Example 1 was placed in a 1 liter flask, equipped with a reflux condenser and containing 300 ml ethylene dichloride and 4.5 g paraformaldehyde. The mixture was stirred for one hour, and 50 ml of concentrated sulfuric acid was added to it. The mixture was heated to reflux temperature and refluxed overnight. The mixture was allowed to cool and the reaction was quenched by adding 100 ml deionized water. The fibers were filtered, washed twice with 100 ml deionized water and twice with 100 ml methanol, and vacuum dried overnight at 50 - 60°C.

### EXAMPLES 26-32

The procedure of Example 25 was repeated using the same fibers, fibers with low crosslinking and no crosslinking, and felted and woven fibers. The fiber products of Examples 25-32 were examined for appearance and tested for surface area by BET. The results of the tests are shown in Table II.

**TABLE II**

| Sample from Example No. | Fiber of Example No. | Polymer Crosslinking | Fiber Appearance | Surface Area by BET m²/g |
|---|---|---|---|---|
| 25 | 1-C | High | Good | 215 |
| 26 | 1-B | Low | Good | 352 |
| 27 | 1-C | High | Excellent | -- |
| 28 | 1-B | Low | Excellent | -- |
| 29 | 1-C | Felted | -- | 38 |
| 30 | 1-C | Woven | -- | <10 |
| 31 | 1-A | Uncrosslinked | -- | <10 |
| 32 | 1-A | Uncrosslinked | -- | 362 |

### EXAMPLE 33

This example illustrates forming macronet fibers from pure polystyrene fibers. The starting fibers were highly crosslinked polystyrene with a surface area of less than one square meter per gram by BET, obtained from Engineering Yarns, Coventry, Rhode Island.

A solution of 40 ml glacial acetic acid, 2 g paraformaldehyde and 110 ml concentrated sulfuric acid was prepared in a 1 liter flask equipped with a reflux condenser. A 2 g sample of the polystyrene fiber was added, and the mixture was heated to 80°C, held at that temperature for two hours, and cooled to room temperature. A suspension of 1 g paraformaldehyde in 200 ml ethylene dichloride was added, the mixture was stirred one hour at room temperature to swell the fibers, then heated to reflux temperature and allowed to reflux overnight. The flask contents were cooled, the solvent was syphoned off, and the fibers were washed twice with 100 ml water followed by three acetone washes of 100 ml each. The washed fibers were dried under vacuum overnight at 50 - 60°C. The surface area of the fibers, measured by BET, was 23 m²/g.

### EXAMPLE 34

The procedure of Example 33 was repeated. The surface area, measured by BET, of the macronet fiber from Example 34 was 40 m²/g.

### EXAMPLES 35-40

These comparative examples illustrate that mere addition of a Lewis acid catalyst to swollen fibers that do not contain active crosslinking sites does not form macronet fibers. The fibers of Example 1 were swollen in either ethylene dichloride or dichloromethane,
and a Lewis acid catalyst was added according to the procedure of Example 3. The mixtures were refluxed overnight, and isolated for testing according to Example 3. The fibers, catalysts and solvents for these examples are tabulated in Table III; the surface area of each material after treatment was less than 10 m²/g, indicating that no macronet structure had formed.

**TABLE III**

| Example | Fiber Crosslinking | Catalyst | Solvent | Surface Area by BET m²/g |
|---|---|---|---|---|
| 35 | Low | AlCl₃ | MC | <10 |
| 36 | High | AlCl₃ | MC | <10 |
| 37 | Low | SnCl₄ | EDC | <10 |
| 38 | High | SnCl₄ | EDC | <10 |
| 39 | Low | AlCl₃ | EDC | <10 |
| 40 | High | AlCl₃ | EDC | <10 |

### EXAMPLES 41-42

These comparative examples illustrate that reaction of chlorosulfonated fibers with a Lewis acid does not form a macronet fiber. A flask was equipped with a heater and nitrogen blanket. To this 300 ml propylene dichloride and 10 g of fiber from Example 1B (for Example 41) or ethylene dichloride and 10 g of fiber from Example 1C (for Example 42) as a swelling solvent were added. The mixture was stirred for 1 hour, and 20 g chlorosulfonic acid was added. The mixture was heated to reflux (Example 41), or to 120°C (Example 42), and maintained at that temperature overnight. The mixture was cooled, the chlorosulfonic acid was removed by suction and the chlorosulfonated fibers were washed twice with 500 ml of the same solvent in which they were swollen, and three times with 500 ml of methanol. A 5.5 ml portion of stannic chloride was added to the chlorosulfonated fibers, the mixture was heated to 80°C, maintained at that temperature overnight then isolated by washing and filtration. The fiber was dried under vacuum overnight at 50 - 60°C and was tested for surface area. Neither sample showed a significant enhancement in surface area.

### EXAMPLE 43

This comparative example illustrates that amination of chlorosulfonated fibers does not form a macronet fiber. A solution of 500 ml ethylene dichloride and 6-7 g triethylenediamine was prepared in a 1 liter flask equipped with a reflux condenser. To this was added 8 g of the chlorosulfonated fibers of Example 2. The mixture was stirred for one hour, heated to reflux, and refluxed overnight. The mixture was cooled and the fibers were filtered, washed with three 300 ml portions of ethylene dichloride, and dried under vacuum overnight at 50 - 60°C. Only a small weight increase was observed, and the surface area of the fibers was not significantly increased.

### EXAMPLE 44

This example shows the dynamic adsorption capacity for some of the macronet fibers from the previous examples. Dynamic adsorption capacity was measured by passing an air stream containing a known concentration of vapor through a column containing the macronet fiber adsorbent, and measuring the concentration of vapor in the effluent air stream using a gas chromatograph with an appropriate detector.

The vapor-containing stream was produced by passing a stream of dry air through a closed container containing the liquid whose vapors are to be adsorbed. The vapor concentration thus produced was determined by passing a known volume of the air-vapor mixture through a tared, activated carbon column large enough to completely adsorb all the vapor. The activated carbon column was weighed after the mixture had passed through it, to determine the total weight of vapor in the known volume of air.

The exception to the foregoing procedure for determining vapor concentration was the case of a humid vapor-air mixture of diisopropyl fluorophosphate. This air-vapor mixture was passed through a sodium hydroxide solution which scrubbed all the diisopropyl fluorophosphate from the mixture, and the total fluorophosphate concentration was calculated from the measured fluoride content of the sodium hydroxide scrubbing solution, as determined by fluoride ion electrode.

The vapors adsorbed in this example are simulants of toxic agents: dimethyl methylphosphonate (DMMP), diisopropyl fluorophosphate (DFP) and 2-chloroethyl isobutyl sulfide (CIS).

The adsorbent fibers were placed in a 3 mm diameter, glass column closed at the bottom end with a coarse sintered disk; the fiber sample was 50-100 mg, as indicated in Table IV. The air-vapor mixture was passed through the column at a flow rate of 40-75 ml/minute, equivalent to a linear flow rate of 9-17 cm/sec. The effluent from the column was split; a portion of it passed through a Hewlett-Packard Model 5880 gas chromatograph equipped with a flame ionization detector or nitrogen-phosphorus detector, as appropriate for the particular vapor, and the balance of the effluent was scrubbed through a bubble column containing 4% aqueous sodium hydroxide and was vented to a hood.

Breakthrough, defined as the time at which the concentration of the challenge vapor in the effluent stream reaches 1% of that in the influent stream, as determined from the gas chromatograph. Detector sensitivity was approximately 1 microgram/liter for DMMP and DFP, and approximately 10 micrograms/liter for CIS. The results of this example are shown in Table IV.

**TABLE IV**

| Sample from Example No. | Sample Weight (g) | Vapor Concentration (mg/liter) | Breakthrough | |
|---|---|---|---|---|
| | | | Time (min) | Capacity (mg/g) |
| 3 | 0.0603 | 2.23(DFP) | <3 | <8.3 |
| 3* | 0.0700 | 3.00(DFP) | <5 | <16 |
| 3* | 0.0781 | 2.01(DFP) | <3 | <5.8 |
| 1-C | 0.0724 | 2.97(DFP) | <3 | <9.2 |
| 5 | 0.0616 | 2.40(DFP) | 156 | 460 |
| 6 | 0.0690 | 2.40(DFP) | 150 | 391 |
| 5 | 0.0530 | 2.38(DFP) | 72 | 242 |
| 6 | 0.0580 | 2.38(DFP) | 55 | 169 |
| 17 | 0.0939 | 1.75(DFP) | 278 | 260 |
| 22 | 0.0337 | 1.85(DFP) | 202 | 443 |
| 23 | 0.0730 | 1.85(DFP) | 215 | 218 |
| 5 | 0.0650 | 2.60(DMMP) | 109 | 327 |
| 6 | 0.0640 | 2.60(DMMP) | 100 | 304 |
| 5 | 0.0509 | 1.53(CIS) | 93 | 210 |
| 6 | 0.0469 | 1.53(CIS) | 46 | 112 |

| | | | | |
|---|---|---|---|---|
| *Repeat preparations of Example 3. | | | | |

### EXAMPLES 45 - 46

These examples illustrate crosslinking swollen polymers containing active crosslinking sites; sulfuric acid is the catalyst for crosslinking. The resulting fibers contain sulfonic acid cation exchange functionality.

Five grams each of the fiber of Example 1A and 1B, chloromethylated according to the procedure of Example 2, were swollen in 300 ml of ethylene dichloride for two hours. To each fiber sample 50 ml of concentrated sulfuric acid was added, and the mixtures were heated to, and held at, the following temperatures for the following times:

| | |
|---|---|
| 40°C | one hour |
| 50°C | one hour |
| 60°C | one hour |
| 70°C | one hour |
| 85°C (reflux) | six hours |

The mixtures were cooled to about 70°C and the reaction was quenched by adding to each 125 ml of 60% aqueous sulfuric acid. The ethylene dichloride was evaporated under reduced pressure, the solutions were cooled to approximately room temperature and poured into fritted glass funnels. The treated fibers were washed three times with 250 - 300 ml of deionized water and three times with 250 - 300 ml of methanol, and were dried under vacuum overnight at 50 - 60°C.

The dried fibers and untreated control fibers were tested for sulfur content, surface area by BET, and for their ability to adsorb diisopropyl fluorophosphate. Breakthrough time and capacity were determined as in Example 44. The results of these tests are shown in Table V.

**TABLE V**

| Sample | Sulfur,% | Surface area m²/g | Breakthrough Time (min) | Capacity (mg/g) |
|---|---|---|---|---|
| 1A | - | 5 | <3 | - |
| Example 45 | 5.01 | 58 | 91±27 | 202±45 |
| 1B | - | 3 | <3 | - |
| Example 46 | 4.87 | 49 | 46±7 | 112±40 |

### EXAMPLE 47

This example illustrates the preparation of macronet fine particles from lightly crosslinked, chloromethylated, emulsion polymerized copolymer particles.

To a 500 ml flask fitted with a mechanical stirrer, reflux condenser vented through a water scrubber, thermometer and heating mantle was charged 10.0 g of dry, chloromethylated, styrene-1.8% divinylbenzene emulsion polymer particles having an average particle diameter of about 0.1 »m and prepared according to Chong, U.S. Patent No. 4,359,537, Example 5, but dried after the initial wash and not treated with the imine or amine. To this 150 ml of technical-grade ethylene dichloride was added, and the mixture was allowed to stand overnight to swell the polymer. To the swollen polymer mixture was added 13.3 g of technical-grade aluminum chloride; the mixture was heated to reflux, and allowed to reflux overnight. The mixture was then cooled and the reaction quenched by adding, dropwise, 220 ml of acetone. The solid material was separated by filtration in a Büchner funnel; it was washed twice with acetone, twice with 3A denatured ethanol, with deionized water until the washings were neutral, and twice more with 3A denatured ethanol. The solid material was soxhlet extracted with 3A denatured ethanol for 5 hours, then dried under vacuum at 50°C overnight. The resulting macronet polymer material had a surface area (BET) of 674 m²/g.

### EXAMPLE 48

This example illustrates the preparation of macronet fine particles from lightly crosslinked, unfunctionalized, emulsion polymerized copolymer particles.

To a flask as described in Example 47 was charged 10.0 g (dry basis) of styrene-1.8% divinylbenzene emulsion polymer particles having an average particle diameter of 0.1 »m and prepared according to US-A-4,359,537, Example 1. To this 180 ml of technical-grade dichloromethane was added, and the mixture was allowed to stand for three hours to swell the polymer. To the swollen polymer mixture was added 20.0 g of technical-grade aluminum chloride; the mixture was heated to reflux and allowed to reflux for 18 hours. The mixture was then cooled and the reaction quenched by adding, dropwise, 250 ml of acetone. The solid material was separated, purified and dried according to the procedure of Example 47. The resulting macronet polymer material had a surface area (BET) of 546 m²/g.

### EXAMPLE 49

This example illustrates the preparation of macronet fine particles from lightly crosslinked, unfunctionalized, emulsion polymerized copolymer particles.

To a flask equipped as described in Example 47 was charged 10.0 g (dry basis) of styrene-0.5% divinylbenzene emulsion polymer particles having an average particle diameter of about 0.1 »m and prepared according to US-A-4,359,537, Example 1.

To this 200 ml of technical-grade dichloromethane was added and the mixture was allowed to stand overnight to swell the polymer. To the swollen polymer was added 20.0 g of technical-grade aluminum chloride; the mixture was heated to reflux and allowed to reflux for 20 hours. The mixture was then cooled and the reaction quenched by adding, dropwise, 150 ml of acetone. The solid material was, separated, purified and dried according to the procedure of Example 47. The resulting macronet polymer material had a surface area (BET) of 818 m²/g.

### EXAMPLE 50

This example illustrates crosslinking of lightly crosslinked, chloromethylated, emulsion polymerized copolymer particles following a brief swelling of the particles in a solvent, to form the macronet particles of the invention.

To a 300 ml flask equipped as described in Example 47 was charged 5.0 g of the chloromethylated styrene-1.8% divinylbenzene emulsion polymer particles used in Example 47. To this 40 ml of ethylene dichloride was added. The mixture was stirred for three minutes at room temperature, then 3.9 ml stannic chloride was added in a single portion; the mixture was heated to reflux and allowed to reflux overnight. The mixture was then cooled and the reaction quenched by adding, dropwise, 30 ml of acetone. The solid material was separated, purified and dried according to the procedure of Example 47. The resulting polymer material had a surface area (BET) of 704 m²/g and a porosity (mercury intrusion) of 1.49 ml/g.

### EXAMPLE 51

This example illustrates preparation of macronet fine particles from chloromethylated, emulsion polymerized copolymer particles, and the use of these particles for adsorption of a toxic-gas simulant.

The procedure of Example 50 was followed, except that the polymer was allowed to swell overnight before the stannic chloride was added, the mixture was refluxed for 7.5 hours, and the reaction was quenched with two 50 ml portions of acetone. The mixture was allowed to stand overnight after quenching; it was then filtered in a Büchner funnel, allowed to air dry, and dried under vacuum at 50°C for three days.

The adsorption capacity of this sample, and a carbon sample of the prior art, under static conditions was determined as follows. A sample of the macronet emulsion-polymerized particles was weighed in a weighing bottle and placed in a desiccator, as was a weighed sample of BPL carbon, a coal-based activated carbon from Calgon Corporation. Dimethyl methylphosphonate was poured into the bottom of the desiccator, which was then sealed. The weighing bottles containing the macronet particle sample and the carbon sample were periodically capped, removed from the desiccator, weighed and returned to the desiccator. The weight gain from adsorption of the dimethyl methylphosphonate was reported as a weight percentage of the original sample weights, and is shown in Table VI.

**Table VI**

| Sample | STATIC CAPACITY (WT %) | | | | |
|---|---|---|---|---|---|
| | 1 day | 1 week | 2 week | 3 week | 4 week |
| Ex. 51 | 15.1 | 54.4 | 90.7 | 89.3 | 103.1 |
| BPL Carbon | 8.9 | 34.7 | 37.8 | 38.6 | 39.0 |

## Claims

1. A process for increasing the surface area of crosslinked poly(vinyl aromatic) polymers in the form of fibers or emulsion - polymerized particles having a particle diameter of from 0.01 to 1»m, which process comprises swelling the polymer in a swelling agent which does not deactivate Friedel-Crafts catalysts and which does not interfere with the formation of a macronet structure, and subsequently introducing additional crosslinking into the polymer to stabilize its swollen structure and form a macronet structure, the additional crosslinking being introduced by:-
i. when the polymer contains active crosslinking sites, contacting the polymer with a Friedel-Crafts catalyst; or
ii. when the polymer contains no active crosslinking sites, reacting the polymer with a crosslinking agent.

2. A process as claimed in claim 1, wherein the polymer is a polymer of styrene, alpha-methylstyrene or styrene ring substituted by 1-3 alkyl groups of 1-3 carbon atoms each; or a copolymer thereof with less than 50% by weight of other monoethylenically unsaturated monomer.

3. A process as claimed in claim 1 or claim 2, wherein the polymer forms the matrix fiber of an heterogeneous polymer fiber, and wherein a plurality of fibers of polyolefin, preferably polypropylene or polybutene, are imbedded longitudinally in the matrix fiber.

4. A process as claimed in any proceeding claim, wherein the swelling agent is an aromatic hydrocarbon, halogenated hydrocarbon, nitroparaffin, nitroaromatic compound, ring-halogenated aromatic compound, aliphatic hydrocarbon of six or more carbon atoms, or carbon disulfide.

5. A process as claimed in any of claims 1 to 4, wherein the Friedel-Crafts catalyst is ferric chloride, stannic chloride, aluminum chloride, aluminum bromide, boron trifluoride or zinc chloride.

6. A process as claimed in any of claims 1 to 5, wherein the swollen polymer is allowed to react in the presence of the Friedel-Crafts catalyst at a temperature from 15°C to 150°C for a period of from 2 to 24 hours.

7. A process as claimed in any of claims 1 to 4, wherein the crosslinking agent is an acylating agent, preferably a diacid chloride of fumaric, maleic, malonic, succinic, adipic or sebacic acid, phosgene or thiophosgene; or an alkylating agent, preferably methyl halomethyl ether, alpha, alpha-dichloro-p-xylene, dichloromethane, bis (4,4'-chloromethyl)biphenyl, bis (chloromethyl)thiophene, 1,4-dichlorohexane, 1,4-dichlorobutane, chloroform, carbon tetrachloride, an alkylene glycol, a diepoxide, a polybutadiene, paraformaldehyde in the presence of a strong acid, formaldehyde in the presence of a strong acid, or a formaldehyde generator in the presence of a strong acid.

8. A process as claimed in any of claims 1 to 4 or 7, wherein the swollen polymer is reacted with the crosslinking reagent at a temperature from 15° to 150°C for a period of from 2 to 24 hours.

9. A crosslinked poly(vinyl aromatic) polymer, in the form of fibers or emulsion polymerized particles, having a macronet structure and a surface area of at least 100 m²/g, and wherein, when the polymer is in the form of emulsion polymerized particles, the polymer is formed from emulsion polymerized particles having a diameter of from 0.01 to 1»m.

10. A polymer as claimed in claim 9, being a polymer of styrene, alpha-methylstyrene or styrene ring substituted by 1-3 alkyl groups of 1-3 carbon atoms each; or a copolymer thereof with less than 50% by weight of other monethylenically unsaturated monomer.

11. A polymer as claimed in claim 9 or claim 10, wherein the polymer forms the matrix fiber of an heterogeneous polymer fiber and wherein a plurality of fibers of polyolefin, preferably polypropylene or polybutene, are imbedded longitudinally in the matrix fiber.

12. A polymer as claimed in any of claims 9 to 11, chemically functionalized for adsorptive, organic-reactive or ion exchange functionality.

13. The use of a polymer as claimed in any of claims 9 to 12 as an adsorbent or ion exchange material

## Patentansprüche

1. Verfahren zur Vergrößerung der Oberfläche von vernetzten poly(vinylaromatischen) Polymeren in der Form von Fasern oder emulsionspolymerisierten Teilchen mit einem Teilchendurchmesser von 0,01 bis 1 »m, welches Verfahren umfaßt: eine Quellen des Polymers in einem Quellungsmittel, welches Friedel-Crafls-Katalysatoren nicht inaktiviert und welches die Bildung einer Makronetzsttuktur nicht stört, und ein anschließendes Einbringen eines zusätzlichen Vernetzers in das Polymer, um seine gequollene Struktur zu stabilisieren und eine Makronetzstruktur auszubilden, wobei der zusätzliche Vernetzer eingebracht wird durch:
i. Kontaktieren des Polymers mit einem Friedel-Crafts-Katalysator, wenn das Polymer aktive Vernetzungsstellen enthält; oder
ii. Umsetzen des Polymers mit einem Vernetzungsmittel, wenn das Polymer keine aktiven Vernetzungsstellen enthält.

2. Verfahren, wie in Anspruch 1 beansprucht, wobei das Polymer ist: ein Polymer von Styrol, von alpha-Methylsryrol oder eines Styrols, dessen Ring mit 1-3 Alkylgruppen mit jeweils 1-3 Kohlenstoffatomen substituiert ist; oder ein Copolymer davon mit weniger als 50 Gew.-% eines anderen monoethylenisch Ungesättigten Monomers.

3. Verfahren, wie in den Ansprüchen 1 oder 2 beansprucht, wobei das Polymer die Matrixfaser einer heterogenen Polymerfaser bildet, und wobei eine Vielzahl von Fasern eines Polyolefins, vorzugsweise Polypropylen oder Polybuten, der Länge nach in der Matrixfaser eingebettet werden.

4. Verfahren, wie in einem vorhergehenden Anspruch beansprucht, wobei das Quellungsmittel ein aromatischer Kohlenwasserstoff ein halogenierter Kohlenwasserstoff, ein Nitroparaffin, eine nitroaromatische Verbindung, eine Ring-halogenierte aromatische Verbindung, ein aliphatischer Kohlenwasserstoff mit sechs oder mehr Kohlenstoffatomen, oder Kohlendisulfid ist.

5. Verfahren, wie in einem der Ansprüche 1 bis 4 beansprucht, wobei der Friedel-Crafts-Katalysator Eisen(III)chlorid, Zinn(IV)chlorid, Aluminiumchlorid, Alumminiumbromid, Bortrifluorid oder Zinkchlorid ist.

6. Verfahren, wie in einem der Ansprüche 1 bis 5 beansprucht, wobei das gequollene Polymer in der Gegenwart des Friedel-Crafts-Katalysators bei einer Temperatur von 15°C bis 150°C während einer Zeitspanne von 2 bis 24 Stunden umsetzen gelassen wird.

7. Verfahren, wie in einem der Ansprüche 1 bis 4 beansprucht, wobei das Vernetzungsmittel ist: ein Acylierungsmittel, vorzugsweise ein Disäurechlorid der Fumarsäure, Maleinsäure, Malonsäure, Bernsteinsäure, Adipinsäure oder Sebazinsäure, Phosgen oder Thiophosgen; oder ein Alkylierungsmittel, vorzugsweise Methylhalogenmethylether, alpha,alpha-Dichlor-p-xylol, Dichlormethan, Bis(4,4'-chlormethyl)biphenyl, Bis(chlormethyl)thiophen, 1,4-Dichlorhexan, 1,4-Dichlorbutan, Chloroform, Tetrachlorkohlenstoff ein Alkylenglykol, ein Diepoxid, ein Polybutadien, Paraformaldehyd in der Gegenwart einer starken Säure, Formaldehyd in der Gegenwart einer starken Säure, oder ein Formaldehyd-Erzeuger in der Gegenwart einer starken Säure.

8. Verfahren, wie in einem der Ansprüche 1 bis 4 oder 7 beansprucht, wobei das gequollene Polymer mit dem Vernetzungsmittel bei einer Temperatur von 15° bis 150°C während einer Zeitspanne von 2 bis 24 Stunden umgesetzt wird.

9. Vernetztes poly(vinylaromatisches) Polymer in der Form von Fasern oder emulsionspolymerisierten Teilchen, welche eine Makronetzstruktur und eine Oberfläche von mindestens 100 m²/g aufweisen, und wobei, wenn das Polymer in der Form von emulsionspolymerisierten Teilchen vorliegt, das Polymer aus emulsionspolymerisierten Teilchen mit einem Durchmesser von 0,01 bis 1 »m gebildet ist.

10. Polymer, wie in Anspruch 9 beansprucht, welches ein Polymer von Styrol, von alpha-Methylstyrol oder eines Styrols, dessen Ring mit 1-3 Alkylgruppen mitjeweils 1-3 Kohlenstoffatomen substituiert ist; oder ein Copolymer davon mit weniger als 50 Gew.-% eines anderen monoethylenisch ungesättigten Monomers, ist.

11. Polymer, wie in Anspruch 9 oder in Anspruch 10 beansprucht, wobei das Polymer die Matrixfaser einer heterogenen Polymerfaser bildet, und wobei eine Vielzahl von Fasern eines Polyolefins, vorzugsweise Polypropylen oder Polybuten, der Länge nach in der Matrixfaser eingebettet sind.

12. Polymer, wie in einem der Ansprüche 9 bis 11 beansprucht, welches für eine adsorptive, organisch-reaktive oder Ionenaustausch-Funktionalität chemisch funktionalisiert ist.

13. Verwendung eines Polymers, wie in einem der Ansprüche 9 bis 12 beansprucht, als ein Adsorbens oder ein Ionenaustauschinaterial.

## Revendications

1. Procédé pour augmenter la surface spécifique de polymères polyvinyl-aromatiques réticulés sous forme de fibres ou de particules polymérisées en émulsion ayant un diamètre de particules de 0,01 à 1 »m, procédé qui comprend le gonflement du polymère dans un agent gonflant qui ne désactive pas les catalyseurs de Friedel et Crafts et qui n'interfère pas avec la formation d'une structure de macrofilet, et ensuite l'introduction d'une réticulation supplémentaire dans le polymère pour stabiliser sa structure gonflée et former une structure de macrofilet, la réticulation supplémentaire étant introduite par :
i. lorsque le polymère contient des sites de réticulation actifs, la mise en contact du polymère avec un catalyseur de Friedel et Crafts; ou
ii. lorsque le polymère ne contient pas de sites de réticulation actifs, la réaction du polymère avec un agent de réticulation.

2. Procédé selon la revendication 1, dans lequel le polymère est un polymère de styrène, d'α-méthylstyrène ou de styrène substitué sur le noyau par 1-3 groupes alkyle de 1-3 atomes de carbone chacun; ou un copolymère de ces derniers avec moins de 50% en poids d'un autre monomère à insaturation mono-éthylénique.

3. Procédé selon la revendication 1 ou la revendication 2, dans lequel le polymère forme la matrice fibreuse de fibre de polymère hétérogène et dans lequel plusieurs fibres de polyoléfine, de préférence de polypropylène ou de polybutène, sont encastrées longitudinalement dans la matrice fibreuse.

4. Procédé selon l'une quelconque des revendications précédentes, dans lequel l'agent gonflant est un hydrocarbure aromatique, un hydrocarbure halogéné, de la nitroparaffine, un composé nitroaromatique, un composé aromatique halogéné sur le noyau, un hydrocarbure aliphatique d'au moins six atomes de carbone ou du disulfure de carbone.

5. Procédé selon l'une quelconque des revendications 1 à 4, dans lequel le catalyseur de Friedel et Crafts est le chlorure ferrique, le chlorure stannique, le chlorure d'aluminium, le bromure d'aluminium, le trifluorure de bore ou le chlorure de zinc.

6. Procédé selon l'une quelconque des revendications 1 à 5, dans lequel on fait réagir le polymère gonflé en présence du catalyseur de Friedel et Crafts à une température de 15°C à 150°C pendant une durée de 2 à 24 heures.

7. Procédé selon l'une quelconque des revendications 1 à 4, dans lequel l'agent de réticulation est un agent d'acylation, de préférence un chlorure de diacide, d'acide fumarique, maléique, malonique, succinique, adipique ou sébacique, du phosgène ou du thiophosgène; ou un agent d'alkylation, de préférence un méthylhalogénométhyléther, de 1'α,α-dichloro-p-xylène, du dichlorométhane, du bis(4,4'-chlorométhyl)biphényle, du bis(chlorométhyl)thiophène, du 1,4-dichlorohexane, du 1,4-dichlorobutane, du chloroforme, du tétrachlorure de carbone, un alkylèneglycol, un diépoxyde, un polybutadiène, du para-formaldéhyde en présence d'un acide fort, du formaldéhyde en présence d'un acide fort, ou un générateur de formaldéhyde en présence d'un acide fort.

8. Procédé selon l'une quelconque des revendications 1 à 4 ou 7, dans lequel on fait réagir le polymère gonflé avec l'agent de réticulation, à une température de 15°C à 150°C pendant une durée de 2 à 24 heures.

9. Polymère polyvinyl-aromatique réticulé, sous forme de fibres ou de particules polymérisées en émulsion, ayant une structure de macrofilet et une surface spécifique d'au moins 100 m²/g, et dans lequel, lorsque le polymère est sous forme de particules polymérisées en émulsion, le polymère est formé à partir de particules polymérisées en émulsion ayant un diamètre de 0,01 à 1 »m.

10. Polymère selon la revendication 9, qui est un polymère de styrène, d'α-méthylstyrène ou de styrène substitué sur le noyau par 1-3 groupes alkyle de 1-3 atomes de carbone chacun; ou un copolymère de ces derniers avec moins de 50% en poids d'un autre monomère à insaturation mono-éthylénique.

11. Polymère selon la revendication 9 ou la revendication 10, dans lequel le polymère forme la matrice fibreuse de fibre de polymère hétérogène et dans lequel plusieurs fibres de polyoléfine, de préférence de polypropylène ou de polybutène, sont encastrées longitudinalement dans la matrice fibreuse.

12. Polymère selon l'une quelconque des revendications 9 à 11, fonctionnalisé chimiquement pour avoir une fonction d'adsorption, de réaction organique ou d'échange d'ions.

13. Utilisation d'un polymère selon l'une quelconque des revendications 9 à 12 comme adsorbant ou comme matière échangeuse d'ions.
